# EUROPEAN PATENT APPLICATION

(11) **EP 2 075 128 A1**
(43) Date of publication of application: **01.07.2009**
(21) Application number: 07122211.1
(22) Date of filing: 04.12.2007
(51) Int. Cl.: B32B 37/12

(54) **Method and apparatus for laminating a substrate**

(71) Applicant: Nederlandse Organisatie voor toegepast-natuurwetenschappelijk onderzoek TNO, 2628 VK Delft (NL)
(72) Inventor: The designation of the inventor has not yet been filed
(74) Representative: Hatzmann, Martin

(57) **Abstract**

A method for laminating a substrate (110) with a foil (120), wherein the foil has a first, patterned surface (121), the method comprises the steps of
providing an auxiliary surface with a layer of an adhesive,
applying the first surface (121) of the foil (120) against the adhesive at said auxiliary surface, therewith transferring adhesive to the first surface (121) of the foil (120),
attaching the first surface (121) of the foil (120) provided with adhesive (141) to a second surface (111) of the substrate (110).

## Description

### BACKGROUND OF THE INVENTION

### Field of the invention

The present invention relates to a method for laminating a substrate with a foil.

The present invention further relates to a apparatus for laminating a substrate with a foil.

### Background of the invention

Various products are fabricated by sequential addition of components to previously supplied components. An important application area is in the manufacturing of electronic components as a stack of foils. These foils often have a patterned surface, i.e. they may contain pits that cooperate with a subsequent foil to form cavities for containing electronic components for example. Also the patterned surface may have perforations to allow electrical connections to be made to conductors external to the stack of foils, or to expose components on one of the foils. For a proper lamination it is desired that an adhesive layer is applied on the whole foil area, except for the deepened portions. Known methods to apply an adhesive layer at such patterned foils are screen printing, stencil printing and possibly inkjet printing / jetting.

### Summary of the invention

It is a purpose of the invention to provide a method and an apparatus for laminating a substrate with a foil, wherein the foil has a first, patterned surface and wherein penetration of adhesive into portions of the patterned surface is counteracted.

According to an aspect a method is provided for laminating a substrate with a foil, wherein the foil has a first, patterned surface, the method comprising the steps of providing an auxiliary surface with a layer of an adhesive,
applying the first surface of the foil against the adhesive at said auxiliary surface using a foil application device,
attaching the first surface of the foil provided with adhesive to a second surface of the substrate.

According to a further aspect an apparatus is provided for laminating a substrate with a foil, wherein the foil has a first, patterned surface, the apparatus comprising a first facility for providing an auxiliary surface with a layer of an adhesive,
a second facility for applying the first surface of the foil against the adhesive at said auxiliary surface,
a third facility for attaching the surface of the foil provided with the adhesive to a second surface of the substrate.

By applying the first patterned surface of the foil to the auxiliary surface with adhesive an amount of adhesive is transferred by contact-transfer to the first patterned surface. Only the higher level portions of the patterned surface are in contact with the adhesive. Hence only the surface of the substrate opposing the portions of the foil that are at a higher level and that are free from adhesive rejecting agent will be provided with adhesive. It has been found that the adhesive in practice does not significantly flow beyond the portions of the substrate that were originally wetted by the adhesive present at the foil. If in a method not according to the invention the adhesive were applied to the second surface of the substrate, and the patterned surface of said first foil were subsequently applied to said second surface, the adhesive would also be present within the deepened portions and portions provided with adhesive rejecting agent of the patterned surface of the first layer.

A first (flexible) foil may serve as a substrate. Alternatively the substrate may be formed by another, rigid material, e.g. an integrated circuit. A substrate with a foil may on its turn serve as a substrate to be laminated with a next foil.

Various ways are possible to pattern the foil. The foil may for example be patterned by the presence of level differences e.g. caused by pits or holes, but may alternatively comprise a pattern of adhesive rejecting regions or spots. E.g. in combination with an adhesive on a water basis, the regions may be provided with a hydrophobic coating. A combination of these technologies may be used, e.g. the foil may comprise a combination of pits, holes and adhesive rejecting spots. An even better rejection of adhesive in the adhesive rejection spots may be obtained if the coating is applied at a fine grained relief. The fine grained relief is e.g. pattern of cones with a size in the range of 5 to 15 µm as described more in detail by M. Groenendijk and J. Meijer, paper M202, ICALEO 2006, Scottsdale, AZ (October 2006).

In situations, where the adhesive has an extremely low viscosity, it may be preferred that the foil application device applies a controlled pressure at the foil. In this way the pressure with which the foil is applied to the substrate may be controlled accurately, so that even in this extreme situation a flow of adhesive is prevented while the foil is still reliably attached to the substrate.

It is noted that GB 1149339 describes a method of applying a light sensitive material to a substrate. According to said method a special roller is used with a resilient corrugated outer surface. In this way it is prevented that the light sensitive material penetrates through the holes in the substrate. This document does not disclose a method for laminating a substrate with a foil.

The substrate on which the foil is applied may be rigid, e.g. the substrate may be a Si-wafer. Alternatively the substrate may be another foil. Such a foil, as well as the patterned foil may be a conventional polymer foils, such as polyester, PET(polyethylene terephtalate) or PEN(polyethylene naphtalate) or poly(imide). Dependent on the specific application the foils have a thickness in the range of 25 - 250 µm. The substrate may have a thickness in the same range, but may alternatively have a larger thickness to provide a rigid background.

Depending on the size of the details in the pattern, the thickness of layer of adhesive transferred from the auxiliary surface to the patterned foil should preferably be in the range of 1 to 25 µm, more preferably in the range of 5 to 15 µm. The layer thickness on the auxiliary surface is not of great importance as only part of the layer thickness, independent of the layer thickness applied on the auxiliary surface is transferred. The amount of adhesive transferred from the auxiliary surface to the foil tends to increase with the viscosity of the adhesive.

It has however been found that for a large range of viscosities of the adhesive this thickness is achieved. However, the adhesive preferably has a viscosity in a range of 500 to 50.000 mPa.s. At a substantially lower viscosity, e.g. a viscosity below 100 mPa.s the adhesive would flow from the foil in a typical high-speed roll to roll manufacturing process. At a viscosity substantially above this range, e.g. having a viscosity higher than 100.000 mPa.s it would be difficult to evenly distribute the adhesive over the foil in such a high-speed process.

Different types of adhesives are possible. For example UV-curing adhesives can be applied at the foil to be provided at the substrate. The adhesive can be hardened after the foil is applied to the substrate. Alternatively, however, adhesives applied in a solution may be used. In that case the adhesive should be dried before application of the foil to the substrate.

It will be clear to the skilled person that the adhesive should have a sufficient wettability for the foil upon which it is applied to promote an even distribution of the adhesive over the foil.

Suitable adhesives to be used in combination with a particular type of foil can be found by the skilled person in Handbook of Adhesion, 2nd Edition D. E. Packham (Editor) ISBN: 978-0-471-80874-9 and Handbook of Adhesive Technology, 2nd Ed, Antonio Pizzi, K. L. Mittal, ISBN 0824709861

### BRIEF DESCRIPTION OF THE DRAWINGS

The invention is described more fully hereinafter with reference to the accompanying drawings, in which embodiments of the invention are shown. Therein:
Figure 1A schematically shows a first stage in a first embodiment of a method according to the invention,
Figure 1B schematically shows a second stage in said embodiment,
Figure 1C schematically shows a third stage in said embodiment,
Figure 2 schematically shows a laminated substrate obtained with method according to the invention,
Figure 3 describes a first embodiment of an apparatus according to the invention,
Figure 4 describes a second embodiment of an apparatus according to the invention.

### DETAILED DESCRIPTION OF EMBODIMENTS

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention. This invention may be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity. Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

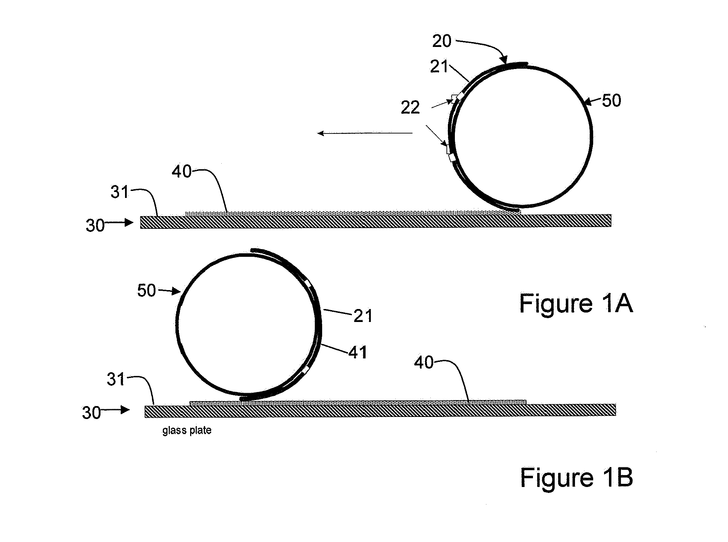

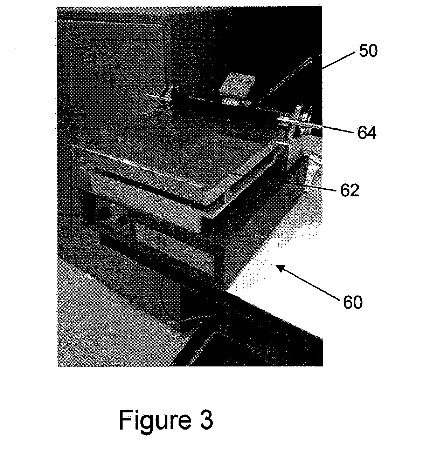

Figure 1A - 1C show a first method for laminating a substrate 10 with a foil 20, wherein the foil 20 has a first, patterned surface 21. The method is carried out with an apparatus as shown in Figure 3. In the embodiment shown the foil 20 has a patterned surface 21 in that the foil comprises vias 22

In Figure 1A it is shown how an auxiliary surface 31, here an auxiliary surface 31 of a glass plate 30 is first provided with a layer 40 of adhesive.

In a next step the first surface 21 of the foil 20 is applied against the layer of adhesive 40 at said auxiliary surface 31 using a foil application device 50. In the embodiment shown the foil application device 50 is a foil application roller 50. The foil 20 is temporarily attached to the foil application roller 50, and rolled with its first surface 21 over the auxiliary surface 31 with the adhesive from the position indicated in Figure 1A to the position indicated in Figure 1B.

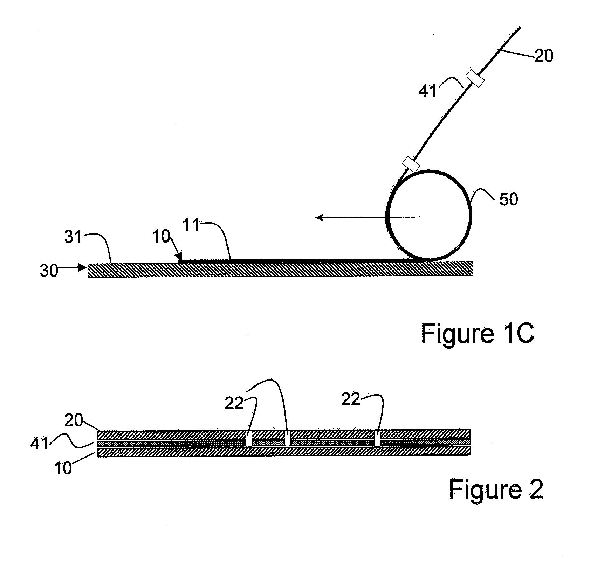

In a next step the foil is unrolled over the substrate 10 as is illustrated in Figure 1C, so that the first surface 21 of the foil 20 provided with adhesive 41 is attached to a second surface 11 of the substrate 10. The roller 50 may be the same roller 50 as used in the steps demonstrated with reference to Figure 1A and 1B. Alternatively, a different arrangement may be used. The substrate 10 may be either a rigid substrate or a flexible substrate, e.g. another foil. In this embodiment the roller 50 serves as a foil application device. In an alternative embodiment the foil application device may have another form, e.g. a body having a substantially flat surface that presses the foil 20 simultaneously at its entire surface against the substrate 10.

The resulting product is shown in Figure 2. The adhesive layer 41 is interrupted in front of the vias 22 in the foil 20.

The method as described with reference to Figures 1A - 1C was implemented using a first PEN foil 10 as the substrate and a second PEN foil as the foil 20. Both PEN foils had a thickness of 100 µm as and a size of 15 x 15 cm. Holes 22 with a diameter of 100 µm were punched through the foil 20. Subsequently, the foil with the holes was mounted on a hollow steel cylinder 50 with a diameter of 20 cm. The steel cylinder 50 was mounted on an automatic film applicator station 60, normally used for wirebar application of coating liquids. This applicator station consists of a rigid table 62 and an automated forward moving arm 64. Figure 3 shows the device with a rubber roll 50 mounted at the arm 64 instead of the steel cylinder.

A PEN sheet 30 with a precoated adhesive layer with a homogeneous adhesive layer 40 with a thickness of 25 µm was applied on the glass plate 62 of the automatic film applicator as described with reference to Figure 3. The adhesive used was an acrylate based UV-curing adhesive, in particular Delo Photobond AD410 having a viscosity of 700 mPas. Subsequently, the steel cylinder 50 was placed in front of this sheet and moved forward automatically until the end of the foil as shown schematically in Figure 1B. Therewith no pressure was applied at the cylinder 50. It will be clear to the skilled person that the pressure exerted on the cylinder 50 may be adapted to the circumstances. For example if the adhesive has a higher viscosity or if a more tight attachment of the foils 10, 20 to each other is desired, a higher pressure may be selected, while a lower pressure may be selected if the adhesive has a lower viscosity, or if the requirements to the adherence between the foils 10, 20 is less strict.

It is estimated based on visual inspection that about half of the adhesive layer 40 is transferred from the surface 31 of the pre-coated sheet 30 to the target foil 20. So, this would result in an adhesive layer thickness of around 12 µm on the foil 20 with vias 22 which is sufficient for most applications. After this, the foil 20 was removed from the steel cylinder and the final target foil was placed as the substrate 10 on the glass plate 62 of the automatic foil applicator station 60. Finally, the foil 20 with vias 22 was laminated onto a target 100 µm PEN foil by rolling forward a rubber roller 50 having a diameter of 5 cm from behind the foil. Therewith a pressure of 40N was applied at the roller 50. It will be clear to the skilled person that the pressure exerted on the cylinder 50 may be adapted to the circumstances.

The experiments were repeated for an acrylate-based adhesive having a viscosity of 42000 (Delo Photobond AD 478) and an epoxy-based adhesive with a viscosity of 32000 mPas (Delo Katiobond 45952). Also for these repeated experiments the foils 10, 20 were reliably adhered to each other after UV-curing, while the vias 22 in the foil 20 were substantially free from adhesive.

| Adhesive | Viscosity (mPa.s) | Pressure (N) | thickness on aux surface (µm) | estimated thickness on foil (µm) |
|---|---|---|---|---|
| Delo Photobond AD410 (acrylate) | 700 | 40 | 25 | 5 |
| Delo Photobond AD 478 (acrylate) | 40000 | 40 | 25 | 12 |
| Delo Katiobond 45952 (epoxy) | 32000 | 40 | 25 | 12 |

The apparatus shown in Figure 3 may comprise a fourth facility to temporarily attach the foil 20 to the foil application roller 50, e.g. in the form of a means for applying a vacuum between the surface of the roller 50 and the foil 20. Alternatively, the foil 20 may be applied manually against the roller 50. The automated forward moving arm 64 forms a fifth facility to roll the foil application roller 50 with the foil 20 with its first surface 21 over the auxiliary surface 31 with the adhesive 41. The automated forward moving arm 64 also forms a sixth facility to unroll the foil 20 from the foil application roller 50 over the substrate 10.

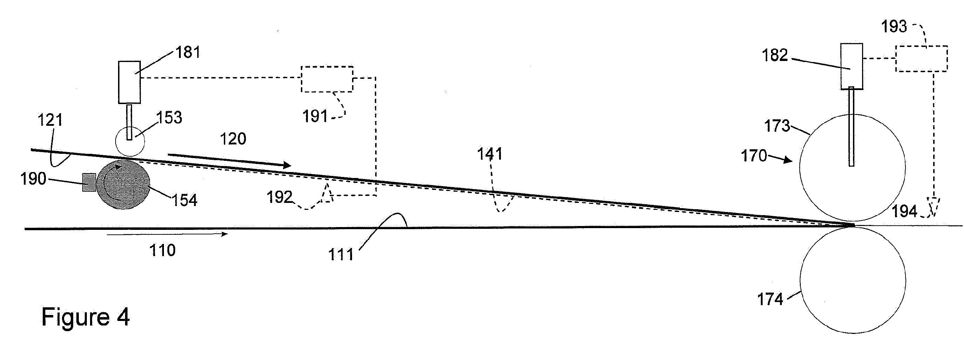

Figure 4 shows an alternative implementation of an apparatus according to the invention. The apparatus shown in Figure 4 operates according to a roll to roll process, wherein a substrate 110 is laminated with a foil 120 in a continuous process.

The foil 120 has a first, patterned surface 121. Parts in Figure 4 corresponding to those in Figures 1A-1C have a reference number that is 100 higher.

The apparatus shown has a first facility 190 for providing an auxiliary surface, here the surface of a roller 154 with a layer of an adhesive. The facility is as such a conventional device for applying a viscous liquid at a roller.

The apparatus shown in Figure 4 comprises a second facility for applying the first surface 121 of the foil 120 against the adhesive at said auxiliary surface of the roller 154. The second facility comprises a foil application device in the form of a foil application roller 153. In the particular embodiment shown in Figure 4, the foil application device 153 has a pressure application device 181 that applies a controlled pressure to the foil 120. The pressure application device 181 may apply a controlled pressure of a constant value. Alternatively the applied pressure may be a related to measured parameter, e.g. a measured thickness. To that end the apparatus may include a sensor 192 and a controller 191 indicated by dashed lines to control the pressure.

The apparatus has a third facility for attaching the surface 121 of the foil provided with the adhesive 141 to a second surface 111 of the substrate 110. The third facility is a laminating facility 170 comprising a pair of roils 174, 173 that are pressed against each other using a further pressure application device 182. The pressure application device 182 may apply a constant pressure, or may apply a controlled variable pressure. To that end the pressure application device 182 may be controlled by a controller 193 that receives input values from a sensor 194, such as a sensor 194 that measures the quality of adherence of the foil 120 to the substrate 110. The sensor 194 may for example detect the presence of air bubbles between the foils. Depending on the type of adhesive used, the apparatus shown in Figure 4 may have additional facilities, for example an UV-source to cure the laminated substrate. The apparatus may also include guidance roll pairs to guide a position the substrate and the foil in the apparatus and tension control roll pairs to control a tension in the foil and the substrate.

Dependent on the type of product to be manufactured and the desired quantity a different method of the invention may be applied. For example if a high accuracy is required, e.g. for the manufacturing of OLED devices, a sheet to sheet process is preferred as described with reference to Figures 1A-1C. If on the other hand a high throughput is required as for example in mass fabrication, the method and apparatus as described with reference to Figure 4 is preferred.

In the claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

## Claims

1. Method for laminating a substrate with a foil, wherein the foil has a first, patterned surface, the method comprising the steps of
providing an auxiliary surface with a layer of an adhesive,
transferring adhesive to the first surface of the foil by applying the first surface of the foil against the adhesive at said auxiliary surface,
attaching the first surface of the foil provided with adhesive to a second surface of the substrate.

2. Method according to claim 1, wherein the substrate is rigid.

3. Method according to claim 1, wherein the substrate is flexible.

4. Method according to claim 1, wherein a controlled pressure is applied at the foil, when the first surface of the foil is applied against the adhesive at said auxiliary surface.

5. Method according to claim 1, wherein a controlled pressure is applied at the foil, when the first surface of the foil provided with adhesive is attached to the second surface of the substrate.

6. Method according to one of the previous claims, wherein the foil is temporarily attached to a foil application roller, and rolled with its first surface over the auxiliary surface with the adhesive, and subsequently the foil is unrolled over the substrate (or rigid substrate).

7. Method according to one of the previous claims, wherein the auxiliary surface is the surface of an adhesive application roller, wherein the foil is guided between the adhesive application roller and the foil application roller, before the foil is attached to the substrate.

8. Method according to claim 1, wherein the first surface of the foil comprises pits.

9. Method according to claim 1, wherein the first surface of the foil comprises perforations through the foil.

10. Method according to claim 1, wherein the first surface of the foil comprises adhesive rejecting regions.

11. Apparatus for laminating a substrate (110) with a foil (120), wherein the foil (120) has a first, patterned surface (121), the apparatus comprising
a first facility (190) for providing an auxiliary surface with a layer of an adhesive,
a second facility (153, 154) for transferring adhesive to the first patterned surface of the foil by applying the first surface (121) of the foil (120) against the adhesive at said auxiliary surface,
a third facility (173, 174) for attaching the first surface (121) of the foil (120) provided with the adhesive (141) to a second surface (111) of the substrate (110).

12. Apparatus according to claim 11, wherein the first facility is a foil application roller (153).

13. Apparatus according to claim 11, wherein the second facility (153) applies a controlled pressure to the foil.

14. Apparatus according to claim 11, wherein the third facility (173, 174) applies a controlled pressure to the foil.

15. Apparatus according to one of the claims 11 to 14, the apparatus comprising a fourth facility to temporarily attach the foil to the foil application roller (50), a fifth facility (62) to roll the foil application roller (50) with the foil (20) with its first surface (21) over the auxiliary surface (31) with the adhesive (40), and a sixth facility (62) to unroll the foil (20) from the foil application roller (50) over the substrate.

16. Apparatus according to claim 11 to 14, wherein the foil (120) is guided between an adhesive application roller (154) and a foil application roller (153) to a laminating facility (173, 174) where the foil (120) is attached to the substrate (110).
